# EUROPEAN PATENT APPLICATION

(11) **EP 4 322 535 A1**
(43) Date of publication of application: **14.02.2024**
(21) Application number: 22861552.2
(22) Date of filing: 18.07.2022
(51) Int. Cl.: H04N 21/422, H04N 21/4363, H04L 12/28, H04Q 9/00

(54) **ELECTRONIC DEVICE FOR DETERMINING LOCATION INFORMATION OF EXTERNAL ELECTRONIC DEVICE, AND OPERATING METHOD THEREOF**

(30) Priority: 23.08.2021 KR 20210110854
(71) Applicant: Samsung Electronics Co., Ltd., Suwon-si, Gyeonggi-do 16677 (KR)
(72) Inventor: YUN, Daeyeon, Suwon-si, Gyeonggi-do 16677 (KR); KANG, Kunsok, Suwon-si, Gyeonggi-do 16677 (KR); NA, Hyeyun, Suwon-si, Gyeonggi-do 16677 (KR); S0H, Byungseok, Suwon-si, Gyeonggi-do 16677 (KR); YOON, Eungsik, Suwon-si, Gyeonggi-do 16677 (KR)
(74) Representative: Appleyard Lees IP LLP
(86) International application number: PCT/KR2022/010413
(87) International publication number: WO 2023/027339

(57) **Abstract**

To control one or more devices, an electronic device according to an embodiment comprises: a communication module for communicating with the one or more devices; a memory for storing computer-executable instructions; and a processor for executing the instructions by accessing the memory, wherein the instructions may be configured to: determine a target device in which a detectable region is to be registered from among the one or more devices; determine a first control region for the target device on the basis of a first coordinate of a location of the electronic device on a pre-set coordinate system, a first direction from the first coordinate to the target device, and a field of view (FoV) of the target device; determine a second control region for the target device on the basis of a second coordinate of the location of the electronic device on the pre-set coordinate system, a second direction from the second coordinate to the target device, and the FoV; and register an overlapping region where the first control region and the second control region overlap, as the detectable region for the target device. Various other embodiments may be possible.

## Description

### TECHNICAL FIELD

The following embodiments relate to an electronic device for determining location information of an external electronic device and an operating method thereof.

### BACKGROUND ART

Ultra-wideband (UWB) communication is a communication technology for transmitting signals using very short pulses (several nanoseconds) with low power over a wide band compared to conventional communication. UWB communication was used for military purposes such as military radar and remote detection in the past, but has expanded its activity area in various fields since the U.S. Federal Communications Commission (FCC) permitted its commercial use limited to indoor wireless communication in the year 2002. Through UWB communication, the time of arrival (TOA), which is the time at which a pulse arrives at a target, and the angle of arrival (AOA) of a pulse in a transmitting device may be precisely measured, which enables precise distance and location recognition with an error of tens of centimeters (cm) indoors.

### DISCLOSURE OF THE INVENTION

### TECHNICAL GOALS

An apparatus for determining a device to be controlled according to a pointing direction using ultra-wideband (UWB) indoors needs to perform a process of registering the location of a device to be controlled first. A user directly moved to the location of the device to be controlled and manually performed the registration process, and a virtual envelope of the device to be controlled was fixed.

### TECHNICAL SOLUTIONS

An electronic device for controlling one or more devices according to an embodiment includes a communication module configured to communicate with the one or more devices, a memory configured to store computer-executable instructions, and a processor configured to execute the instructions by accessing the memory, wherein the instructions may be configured to determine a target device of which an envelope is to be registered among the one or more devices, determine a first control area for the target device based on first coordinates of a location of the electronic device on a preset coordinate system, a first direction from the first coordinates to the target device, and a field of view (FoV) for the target device, determine a second control area for the target device based on second coordinates of the location of the electronic device on the preset coordinate system, a second direction from the second coordinates to the target device, and the FoV, and register an overlap area where the first control area and the second control area overlap as the envelope for the target device.

According to an embodiment, the instructions may be further configured to determine a third control area for the target device based on third coordinates of the location of the electronic device on the preset coordinate system, a third direction from the third coordinates to the target device, and the FoV, and update the envelope for the target device based on the third control area and the overlap area.

According to an embodiment, the instructions may be further configured to, when a user input for controlling a device is received, determine a control target device among the one or more devices, and control the control target device based on the user input for controlling the device.

According to an embodiment, the instructions may be further configured to adjust a FoV for the control target device based on coordinates of the electronic device on the preset coordinate system, a pointing direction of the electronic device, and pre-registered envelopes respectively for the one or more devices.

According to an embodiment, the target device may be determined based on a user input.

According to an embodiment, the preset coordinate system may be set by the electronic device and a reference electronic device for performing ultra-wideband (UWB) communication with the electronic device.

According to an embodiment, the first control area, the second control area, and the overlap area may be calculated by the reference electronic device.

According to an embodiment, the electronic device may communicate with the one or more devices based on at least one of Infrared (IR) or Bluetooth Low Energy (BLE).

An operating method of an electronic device for registering an envelope of a device according to an embodiment includes determining a target device of which an envelope is to be registered among one or more devices for performing communication with the electronic device; determining a first control area for the target device based on first coordinates of a location of the electronic device on a preset coordinate system, a first direction from the first coordinates to the target device, and a FoV for the target device; determining a second control area for the target device based on second coordinates of the location of the electronic device on the preset coordinate system, a second direction from the second coordinates to the target device, and the FoV; and registering an overlap area where the first control area and the second control area overlap as the envelope for the target device.

According to an embodiment, the operating method may further include determining a third control area for the target device based on third coordinates of the location of the electronic device on the preset coordinate system, a third direction from the third coordinates to the target device, and the FoV; and updating the envelope for the target device based on the third control area and the overlap area.

According to an embodiment, the operating method may further include, when a user input for controlling a device is received, determining a control target device among the one or more devices; and controlling the control target device based on the user input for controlling the device.

According to an embodiment, the operating method may further include adjusting a FoV for the control target device based on coordinates of the electronic device on the preset coordinate system, a pointing direction of the electronic device, and pre-registered envelopes respectively for the one or more devices.

According to an embodiment, the target device may be determined based on a user input.

According to an embodiment, the preset coordinate system may be set by the electronic device and a reference electronic device for performing UWB communication with the electronic device.

According to an embodiment, the first control area, the second control area, and the overlap area may be calculated by the reference electronic device.

According to an embodiment, the electronic device may communicate with the one or more devices based on at least one of IR or BLE.

An operating method of an electronic device according to an embodiment includes determining a control target device among one or more devices for performing communication with the electronic device based on coordinates of the electronic device on a preset coordinate system, a pointing direction of the electronic device, and pre-registered envelopes respectively for the one or more devices; and adjusting a FOV for the control target device based on the coordinates of the electronic device, the pointing direction, and the pre-registered envelopes respectively for the one or more devices.

According to an embodiment, the control target device may be determined based on a user input.

According to an embodiment, the preset coordinate system may be set by the electronic device and a reference electronic device for performing UWB communication with the electronic device.

According to an embodiment, the electronic device may communicate with the one or more devices based on at least one of IR or BLE.

An electronic device according to an embodiment includes a communication module configured for communication with a remote control device for controlling one or more devices; a memory configured to store computer-executable instructions; and a processor configured to execute the instructions by accessing the memory, wherein the instructions may be configured to determine a target device of which an envelope is to be registered among the one or more devices, determine a first control area for the target device based on first coordinates of a location of the remote control device on a preset coordinate system, a first direction from the first coordinates to the target device, and a FoV of the remote control device for the target device, determine a second control area for the target device based on second coordinates of the location of the remote control device on the preset coordinate system, a second direction from the second coordinates to the target device, and the FoV, and register an overlap area where the first control area and the second control area overlap as the envelope for the target device.

### EFFECTS

According to various embodiments, an electronic device for registering the location of a control target device with only a few controls and updating an envelope of the control target device may be provided.

According to various embodiments, an electronic device for adaptively adjusting a field of view (FoV) for a control target device based on a registered envelope of the control target device may be provided.

In addition, various effects directly or indirectly ascertained through the present disclosure may be provided.

### BRIEF DESCRIPTION OF DRAWINGS

FIGS. 1A and 1B are block diagrams of a reference electronic device according to an embodiment.
FIGS. 2A and 2B are diagrams illustrating a remote control device according to an embodiment.
FIG. 3 is a diagram illustrating an indoor environment in which a remote control device for controlling a reference electronic device, one or more devices, and a device is located according to an embodiment.
FIG. 4 is a diagram illustrating an operation of determining an envelope for a target device according to an embodiment.
FIG. 5 is a diagram illustrating an operation of adjusting a field of view (FoV) for a control target device according to an embodiment.
FIG. 6 is a flowchart illustrating an operation of a remote control device according to various embodiments.
FIG. 7 is a flowchart illustrating an operation of updating an envelope for a target device according to various embodiments.
FIG. 8 is a flowchart illustrating an operation of controlling a control target device according to various embodiments.
FIG. 9 is a flowchart illustrating an operation of adjusting a FoV for a control target device according to various embodiments.

### BEST MODE FOR CARRYING OUT THE INVENTION

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly, the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or populations thereof.

Unless otherwise defined, all terms, including technical and scientific terms, used herein have the same meaning as commonly understood by those having ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and a repeated description related thereto will be omitted.

### < Reference Electronic Device >

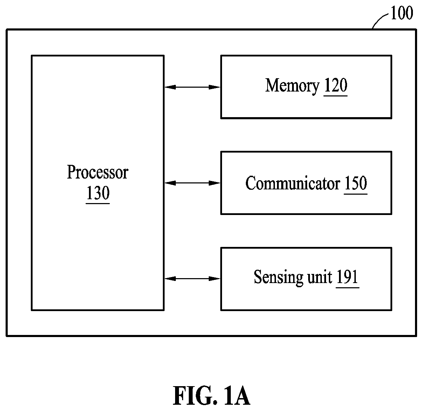

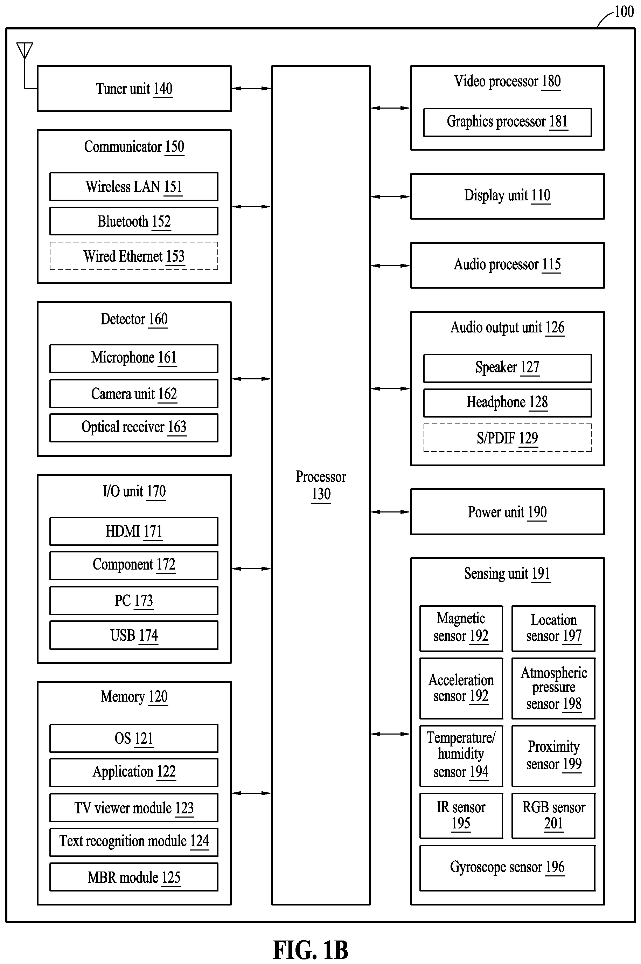

FIGS. 1A and 1B are block diagrams of a reference electronic device according to an embodiment.

As shown in FIG. 1A, a reference electronic device 100 according to an embodiment may include a memory 120, a processor 130, a communicator 150, and a sensing unit 191. However, not all the shown components are essential. The reference electronic device 100 may be implemented by more or fewer components than the shown components.

For example, as shown in FIG. 1B, the reference electronic device 100 according to an embodiment may further include a display 110, a tuner unit 140, a detector 160, an input/output (I/O) unit 170, a video processor 180, an audio processor 115, an audio output unit 126, and a power unit 190, in addition to the memory 120, the processor 130, the communicator 150, and the sensing unit 191.

Hereinafter, the components stated above are described.

The processor 130 may control the overall operation of the reference electronic device 100 and a flow of signals between the internal components of the reference electronic device 100, and process data. The processor 130 may execute an operation system (OS) and various applications stored in the memory 120, when a user input is provided or a preset and stored condition is satisfied.

The processor 130 may include random-access memory (RAM) configured to store data or a signal input from the outside of the reference electronic device 100 or used as a storage area corresponding to various tasks performed by the reference electronic device 100, read-only memory (ROM) configured to store a control program for controlling the reference electronic device 100, and a processor.

The processor 130 may include a graphics processing unit (GPU) (not shown) to process graphics corresponding to a video. The processor 130 may be implemented as a System on Chip (SoC) that integrates a core (not shown) and a GPU (not shown). The processor 130 may include a single-core processor, a dual-core processor, a triple-core processor, a quad-core processor, and a multi-core processor.

Further, the processor 130 may include a plurality of processors. For example, the processor may be implemented with a main processor (not shown) and a sub-processor (not shown) that operates in a sleep mode.

According to an embodiment, the processor 130 may execute one or more instructions stored in the memory 120, thereby detecting at least one sensed value corresponding to at least one sensor through the sensing unit 191 including at least one sensor.

In addition, according to an embodiment, the processor 130 may execute the one or more instructions stored in the memory 120, thereby determining the remote control device 200 touches the reference electronic device 100 when it is determined the detected at least one sensed value is greater than or equal to a preset threshold.

In addition, according to an embodiment, the processor 130 may execute the one or more instructions stored in the memory 120, thereby determining the remote control device 200 touches the reference electronic device 100 through a comparison between the detected at least one sensed value and a sensed value of the remote control device received from the remote control device 200.

In addition, according to an embodiment, the processor 130 may execute the one or more instructions stored in the memory 120, thereby requesting identification information of the remote control device 200 and receiving the identification information of the remote control device 200. Further, the processor 130 may verify that the remote control device 200 is a device pre-registered in the reference electronic device 100 based on the identification information of the remote control device 200.

In addition, according to an embodiment, the processor 130 may execute the one or more instructions stored in the memory 120, thereby determining a touch area touched on the reference electronic device 100 by the remote control device 200 based on the at least one sensed value.

In addition, according to an embodiment, the processor 130 may execute the one or more instructions stored in the memory 120, thereby comparing the at least one sensed value detected corresponding to at least one sensor and determining one or more sensors that determine the remote control device 200 is disposed close to a touched point on the reference electronic device 100 based on the comparison result. Further, the processor 130 may determine a touch area based on the determined one or more sensors.

In addition, according to an embodiment, the processor 130 may receive state information about an operation being executed in the remote control device 200 from the remote control device 200 through the communicator 150.

In addition, according to an embodiment, the processor 130 may execute the one or more instructions stored in the memory 120, thereby performing a preset function corresponding to the determined touch area based on the state information received from the remote control device 200.

In addition, according to an embodiment, the processor 130 may execute the one or more instructions stored in the memory 120, thereby determining the number of touches that the remote control device 200 touches the reference electronic device 100 based on the at least one sensed value.

In addition, according to an embodiment, the processor 130 may execute the one or more instructions stored in the memory 120, thereby performing a preset function corresponding to the number of touches.

In addition, according to an embodiment, the processor 130 may execute the one or more instructions stored in the memory 120, thereby setting in advance a function corresponding to at least one touch area on the reference electronic device 100 based on a user input.

Further, the processor 130 may execute the one or more instructions stored in the memory 120, thereby setting in advance a function corresponding to the number of touches that at least one touch area on the reference electronic device 100 is touched based on a user input.

The memory 120 may store various data, a program, or an application for driving and controlling the reference electronic device 100 under the control of the processor 130. The memory 120 may store data or I/O signals corresponding to driving of the video processor 180, the display 110, the audio processor 115, the audio output unit 126, the power unit 130, the tuner unit 140, the communicator 150, the detector 160, and the I/O unit 170.

The memory 120 may store an operating system 121 for controlling the reference electronic device 100 and the processor 130, an application 122 initially provided by a manufacturer or externally downloaded, a graphical user interface (GUI) related to the application, an object (e.g., an image text, an icon, a button, or the like) for providing the GUI, user information, a document, a database, or related data.

Further, the memory 120 may include a television (TV) viewer module 123 including one or more instructions to receive an input signal from the remote control device 200 and thereby perform channel control corresponding to the input signal or to enter a channel scroll user interface mode when the input signal corresponds to a predesignated input, a text recognition module 124 including one or more instructions to recognize information from content received from an external device (not shown), and a memory buffer register (MBR) module 125 including one or more instructions for controlling channels from an external device (not shown).

The memory 120 may include ROM, RAM, or a memory card (e.g., a micro secure digital (SD) card or universal serial bus (USB) memory (not shown)) mounted to the reference electronic device 100. Further, the memory 120 may include non-volatile memory, volatile memory, a hard disk drive (HDD), or a solid state drive (SSD).

According to an embodiment, the memory 120 may include at least one type of storage medium of a flash memory type memory, a hard disk type memory, a multimedia card micro type memory, a card type memory (e.g., an SD or extreme digital (XD) memory), a random-access memory (RAM), a static random-access memory (SRAM), a read-only memory (ROM), an electrically erasable programmable read-only memory (EEPROM), a programmable read-only memory (PROM), a magnetic memory, a magnetic disk, and an optical disk.

The display 110 may display a video included in a broadcast signal received through the tuner unit 140 on a screen under the control of the processor 130. In addition, the display 110 may display content (e.g., a moving image) input through the communicator 150 or the I/O unit 170. The display 110 may output an image stored in the memory 120 under the control of the processor 130.

The display 110 may generate a driving signal by converting an image signal, a data signal, an on-screen display (OSD) signal, and a control signal processed by the processor 130. The display 110 may be implemented as a plasma display panel (PDP), a liquid crystal display (LCD), an organic light-emitting diode (OLED), a cathode-ray tube (CRT), or a flexible display, and in addition, the display 110 may be implemented as a three-dimensional (3D) display. Further, the display 110 may be configured as a touch screen and used as an input device as well as an output device.

The tuner unit 140 may tune and select only a frequency of a channel desired by the reference electronic device 100 among various radio wave elements through amplification, mixing, or resonance of a broadcast signal received by wire or wirelessly. The broadcast signal may include audio, a video, and additional information (e.g., an electronic program guide (EPG)).

The tuner unit 140 may receive the broadcast signal in a frequency band corresponding to a channel number according to a user input (e.g., a control signal received from the remote control device 200, that is, a channel number input, an up-down input of a channel, and a channel input on an EPG screen).

The tuner unit 140 may receive the broadcast signal from various sources, such as a terrestrial broadcast, a cable broadcast, a satellite broadcast, and an Internet broadcast. The tuner unit 140 may receive the broadcast signal from a source, such as an analog broadcast or a digital broadcast. The broadcast signal received by the tuner unit 140 may be separated into the audio, the video, and/or the additional information by decoding (e.g., audio decoding, video decoding, or additional information decoding). The separated audio, video, and/or additional information may be stored in the memory 120 under the control of the processor 130.

The reference electronic device 100 may include one or more tuner units 140. The tuner unit 140 may be implemented as an all-in-one with the reference electronic device 100, or implemented as a separate device (e.g., a set-top box (not shown) or a tuner unit (not shown) connected to the I/O unit 170) having a tuner unit electrically connected to the reference electronic device 100.

The communicator 150 may connect the reference electronic device 100 to an external device (e.g., an audio device) (not shown) under the control of the processor 130. The processor 130 may transmit/receive content to/from the external device (not shown) connected through the communicator 150, download an application from the external device (not shown), or perform web browsing. The communicator 150 may include one of a wireless local area network (LAN) 151, Bluetooth 152, and wired Ethernet 153 corresponding to the performance and structure of the reference electronic device 100. Further, the communicator 150 may include a combination of the wireless LAN 151, Bluetooth 152, and the wired Ethernet 153.

In addition, the communicator 150 may receive a control signal from the remote control device 200 under the control of the processor 130. The control signal may be implemented as a Bluetooth signal, a radio frequency (RF) signal, or a Wi-Fi signal.

In addition, the communicator 150 may further include another type of short-range wireless communication (e.g., near-field communication (NFC) (not shown) or Bluetooth low energy (BLE) (not shown) other than Bluetooth.

The detector 160 may detect a voice, image, or interaction of a user, and may include a microphone 161, a camera unit 162, and an optical receiver 163.

The microphone 161 may receive an uttered voice of the user. The microphone 161 may convert the received voice into an electrical signal and output the electrical signal to the processor 130. The user voice may include, for example, a voice corresponding to a menu or a function of the reference electronic device 100.

The camera unit 162 may obtain an image bezel, such as a still image or a moving image. An image captured by an image sensor may be processed by the processor 130 or a separate image processor (not shown).

The image bezel processed by the camera unit 162 may be stored in the memory 120 or transmitted to the outside through the communicator 150. Two or more camera units 162 may be provided based on an aspect of the configuration of the reference electronic device 100.

The optical receiver 163 may receive an optical signal (including a control signal) received from the remote control device 200 on the outside. The optical receiver 163 may receive an optical signal corresponding to a user input (e.g., a touch, a press, a touch gesture, a voice, or a motion) from the remote control device 200. The control signal may be extracted from the received optical signal under the control of the processor 130. For example, the optical receiver 163 may receive a control signal corresponding to a channel up/down button for changing a channel from the remote control device 200.

The I/O unit 170 may receive a video (e.g., a moving image), audio (e.g., a voice, music, etc.), and additional information (e.g., an EPG, etc.) from the outside of the reference electronic device 100 under the control of the processor 130. The I/O unit 170 may include at least one of a high-definition multimedia interface (HDMI) port 171, a component jack 172, a personal computer (PC) port 173, and a USB port 174. The I/O unit 170 may include a combination of at least one of the HDMI port 171, the component jack 172, the PC port 173, and the USB port 174. An external image providing device (not shown) may be connected through the HDMI port 171.

The video processor 180 may process video data received by the reference electronic device 100. The video processor 180 may perform various image processing, such as decoding, scaling, noise filtering, bezel rate conversion, and resolution conversion, on the video data.

A graphics processor 181 may generate a screen including various objects, such as an icon, an image, and text, using an operation unit (not shown) and a renderer (not shown). The operation unit (not shown) may calculate attribute values such as coordinate values, shape, size, and color with which each of the objects is to be displayed based on the layout of a screen using the user input detected by the detector 160. The renderer (not shown) may generate a screen of various layouts including an object based on the attribute values calculated by the operation unit (not shown). The screen generated by the renderer (not shown) may be displayed in a display area of the display 110.

The audio processor 115 may process audio data. The audio processor 115 may perform various processing, such as decoding, amplification, and noise filtering, on the audio data. Meanwhile, the audio processor 115 may include a plurality of audio processing modules to process audio corresponding to a plurality of content.

The audio output unit 126 may output the audio included in the broadcast signal received through the tuner unit 140 under the control of the processor 130. The audio output unit 126 may output the audio (e.g., a voice or a sound) input through the communicator 150 or the I/O unit 170. In addition, the audio output unit 126 may output the audio stored in the memory 120 under the control of the processor 130. The audio output unit 126 may include at least one of a speaker 127, a headphone output terminal 128, or a Sony/Philips digital interface (S/PDIF) output terminal 129. The audio output unit 126 may include a combination of at least one of the speaker 127, the headphone output terminal 128, and the S/PDIF output terminal 129.

The power unit 190 may supply power to be input from an external power source to the components inside the reference electronic device 100 under the control of the processor 130. In addition, the power unit 190 may supply power output from one or more batteries (not shown) located inside the reference electronic device 100 to the components inside the reference electronic device 100 under the control of the processor 130.

The sensing unit 191 may detect a state of the reference electronic device 100 or a state around the reference electronic device 100 and transmit the detected information to the processor 130.

The sensing unit 191 may include at least one of a magnetic sensor 192, an acceleration sensor 193, a temperature/humidity sensor 194, an infrared (IR) sensor 195, a gyroscope sensor 196, a location sensor (e.g., global positioning system (GPS)) 197, an atmospheric pressure sensor 198, a proximity sensor 199, and a red, green and blue (RGB) sensor 201 (e.g., an illuminance sensor), but is not limited thereto. Since one having ordinary skill in the art may intuitively infer the function of each sensor from its name, a detailed description thereof is omitted.

According to an embodiment, the sensing unit 191 may include a Hall sensor (not shown). The Hall sensor may be a transducer for generating an electrical signal (e.g., a voltage) in response to a magnetic field. The Hall sensor may generate an electrical signal of a relatively high intensity when the magnetic field is strong, and generate an electrical signal of a relatively low intensity when the magnetic field is weak. The processor 130 may receive an electrical signal according to the detection of the magnetic field from the Hall sensor.

According to an embodiment, the sensing unit 191 may include an electronic compass (E-compass) or fluxgate compass capable of detecting the angle of the reference electronic device 100 using the magnetic sensor 192, the acceleration sensor 193, and the Hall sensor. For example, the magnetic sensor 192 may measure coordinates using the magnetic field and a line of magnetic force, and the Hall sensor may measure the angle of the reference electronic device 100 by detecting the strength of the magnetic field.

According to an embodiment, the processor 130 may measure the yaw, pitch, and roll values of the reference electronic device 100 through motion data obtained from the sensing unit 191. The motion data according to an embodiment may include 3-axis motion data (x1, y1, z1) obtained from the acceleration sensor 193 or 9-axis motion data obtained by additionally using the gyroscope sensor 196 and the magnetic sensor 192.

According to an embodiment, the processor 130 may obtain the yaw, pitch, and/or roll value information measured from the 9-axis motion data.

The sensing unit 191 according to an embodiment may detect an external impact applied to the reference electronic device 100. For example, when the remote control device 200 touches the reference electronic device 100, the sensing unit 191 of the reference electronic device 100 may output a sensed value.

In addition, the reference electronic device 100 including the display 110 may be electrically connected to a separate external device (e.g., a set-top box (not shown)) including the tuner unit 140.

Further, the reference electronic device 100 may be implemented as an analog TV, a digital TV, a 3D-TV, a smart TV, an LED TV, an OLED TV, a plasma TV, or a monitor, but is not limited thereto, which may be easily understood by one having ordinary skill in the art.

Meanwhile, the shown block diagram of the reference electronic device 100 is a block diagram for an embodiment. The components in the block diagram may be integrated, added, or omitted based on the specifications of the reference electronic device 100 actually implemented. That is, two or more components may be integrated into one component, or one component may be divided into two or more components, as necessary. In addition, the function performed by each block is intended to describe the embodiments, and its detailed operation or device does not limit the scope of the present disclosure.

### < Remote Control Device >

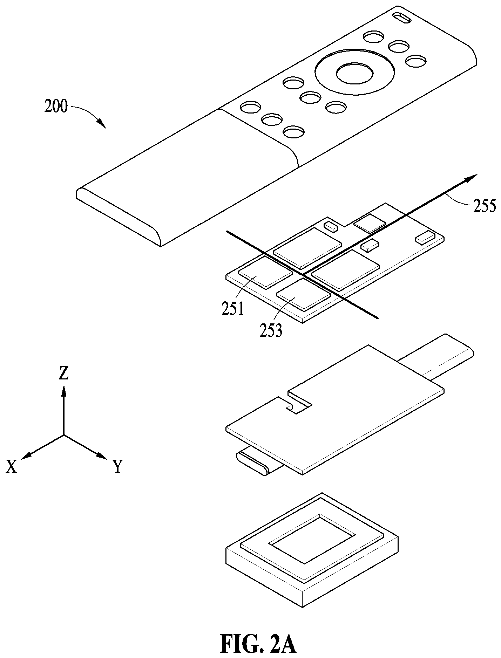

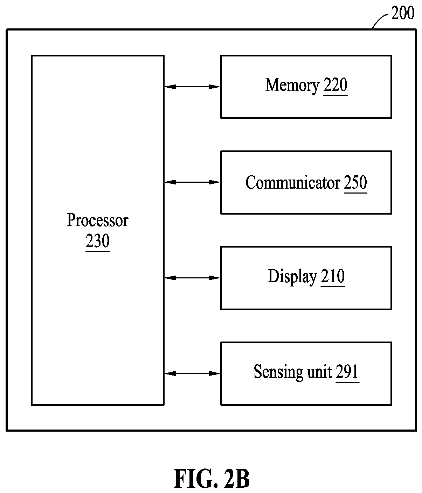

FIGS. 2A and 2B are diagrams illustrating a remote control device according to an embodiment.

Referring to FIG. 2A, a block diagram of the remote control device 200 according to an embodiment is shown. According to an embodiment, the remote control device 200 may include one or more antennas (e.g., a first antenna 251 and a second antenna 253) for performing communication (e.g., ultra-wideband (UWB) communication) with the reference electronic device 100.

According to an embodiment, a pointing direction 255 of the remote control device 200 may be determined based on the first antenna 251 and the second antenna 253. According to an embodiment, viewing an indoor environment in which the reference electronic device 100 and the remote control device 200 operate from above, the indoor environment may be expressed as a plane (e.g., an XY plane viewed from the +Z axis), and the pointing direction 255 of the remote control device 200 may be determined to be one direction on the plane.

Referring to FIG. 2B, a block diagram of the remote control device 200 according to an embodiment is shown. According to an embodiment, the remote control device 200 may include at least a portion of the components of the device shown in FIGS. 1Aand 1B.

As shown in FIG. 2B, the remote control device 200 according to an embodiment may include a display 210, a memory 220, a communicator 250, a sensing unit 291, and a processor 230. However, not all of the components shown in FIG. 2B are essential components of the remote control device 200. The remote control device 200 may be implemented by more or fewer components than those shown in FIG. 2B.

According to an embodiment, the display 210 of the remote control device 200 may generate a driving signal by converting an image signal, a data signal, an OSD signal, or a control signal processed by the processor 230.

In addition, the display 210 may display content (e.g., a moving image) input through the communicator 250 or an I/O unit (not shown). The display 210 may output an image stored in the memory 220 under the control of the processor 230.

According to an embodiment, the memory 220 of the remote control device 200 may store a program for processing and controlling the processor 230 or store data input to the remote control device 200 or output from the remote control device 200.

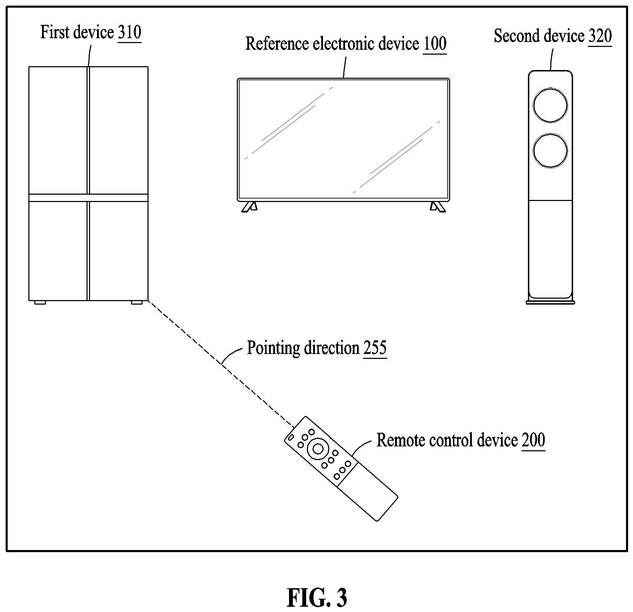

According to an embodiment, the processor 230 typically controls the overall operation of the remote control device 200. For example, the processor 230 may execute programs stored in the memory 220, thereby generally controlling the sensing unit 291 and the communicator 250. The processor 230 may control the operation of the remote control device 200, which will be described with reference to FIGS. 3 to 10.

The processor 230 may include one or more processors. At this time, the one or more processors may include a general-purpose processor, such as a central processing unit (CPU), an application processor (AP), or a digital signal processor (DSP), or a graphic-dedicated processor, such as a GPU or a vision processing unit (VPU). The one or more processors control input data to be processed according to a predefined operation rule stored in the memory.

According to an embodiment, the processor 230 may receive a wireless signal transmitted by the reference electronic device 100 through the communicator 250.

In addition, the processor 230 may receive a request for identification information of the remote control device 200 from the reference electronic device 100 through the communicator 250. The processor 230 may control the identification information of the remote control device 200 to be transmitted to the reference electronic device 100 through the communicator 250.

In addition, the processor 230 may control a sensed value detected by the sensing unit 291 to be transmitted to the reference electronic device 100 through the communicator 250.

Further, the processor 230 may receive a request for state information about an operation being executed on the remote control device 200 through the communicator 250. The processor 230 may generate the state information about the operation being executed. Further, the processor 230 may control the state information about the operation being executed to be transmitted to the reference electronic device 100 through the communicator 250.

Further, the memory 220 may include at least one type of storage medium of a flash memory type memory, a hard disk type memory, a multimedia card micro type memory, a card type memory (e.g., an SD or xD memory), a random access memory (RAM), a static random access memory (SRAM), a read-only memory (ROM), an electrically erasable programmable read-only memory (EEPROM), a programmable read-only memory (PROM), a magnetic memory, a magnetic disk, or an optical disk.

In addition, according to an embodiment, the communicator 250 may include one or more components for allowing the remote control device 200 to communicate with the outside. For example, the communicator 250 may include a short-range wireless communication unit (not shown), a mobile communication unit (not shown), and a broadcast receiving unit (not shown).

The short-range wireless communication unit may include a Bluetooth communication unit, a BLE communication unit, a near-field communication (NFC) unit, a WLAN (Wi-Fi) communication unit, a Zigbee communication unit, an infrared data association (IrDA) communication unit, a Wi-Fi direct (WFD) communication unit, an ultra-wideband (UWB) communication unit, and an Ant+ communication unit, but is not limited thereto.

The mobile communication unit transmits and receives a wireless signal to and from at least one of a base station, an external terminal, and a server on a mobile communication network. Here, the wireless signal may include various types of data according to the transmission and reception of a voice call signal, a video call signal, or a text/multimedia message.

The broadcast receiving unit receives a broadcast signal and/or broadcast-related information from the outside through a broadcast channel. The broadcast channel may include a satellite channel and a terrestrial channel. Depending on an example of implementation, the remote control device 200 may not include a broadcast receiving unit.

The sensing unit 291 may detect a state of the remote control device 200 or a state around the remote control device 200 and transmit the detected information to the processor 230.

The sensing unit 291 may include at least one of a magnetic sensor, an acceleration sensor, a temperature/humidity sensor, an IR sensor, a gyroscope sensor, a location sensor (e.g., a GPS), a light sensor, a proximity sensor, and an RGB sensor (e.g., an illuminance sensor), but is not limited thereto. Since one having ordinary skill in the art may intuitively infer the function of each sensor from its name, a detailed description thereof is omitted. The sensing unit 291 according to an embodiment may correspond to the sensing unit 191 described with reference to FIG. 1B, and a repeated description thereof will be omitted. As described with reference to FIG. 1B, the processor 230 may obtain the yaw, pitch, and/or roll value information measured from 9-axis motion data through the sensing unit 291.

According to an embodiment, the sensing unit 291 may detect an external impact applied to the remote control device 200. According to an embodiment, the acceleration sensor embedded in the remote control device 200 may detect an impact caused by a touch motion on the reference electronic device 100. Further, the acceleration sensor embedded in the remote control device 200 may sense the moving speed and acceleration of the remote control device 200.

Further, the display 210, the memory 220, the communicator 250, the sensing unit 291, and the processor 230 of the remote control device 200 will be described based on the description of the display 110, the memory 120, the communicator 150, the sensing unit 191, and the processor 130 of the reference electronic device 100 provided with reference to FIGS. 1A and 1B.

FIG. 3 is a diagram illustrating an indoor environment in which an electronic device for controlling a reference electronic device, one or more devices, and a device is located according to an embodiment.

Operations described with reference to FIGS. 3 to 9 may be performed by the processor 230 of the remote control device 200 or the processor 130 of the reference electronic device 100. Alternatively, related data may be transmitted to an external server through the reference electronic device 100, and the operations may be performed by the server.

Referring to FIG. 3, the reference electronic device 100 (e.g., a TV), the remote control device 200, a first device 310 (e.g., a refrigerator), and a second device 320 (e.g., an air conditioner) may be present in an indoor environment. As described with reference to FIG. 2B, the remote control device 200 may communicate with the reference electronic device 100, the first device 310, and the second device 320, and a user may control the operation of the reference electronic device 100, the first device 310, and the second device 320 using the remote control device 200.

According to an embodiment, the remote control device 200 may perform Bluetooth, Bluetooth Low Energy (BLE), near-field communication (NFC), WLAN (Wi-Fi), Zigbee, and infrared data association (IrDA) communication with one or more devices (e.g., the first device 310 and the second device 320).

According to an embodiment, the remote control device 200 may perform ultra-wideband (UWB) communication with the reference electronic device 100, set a virtual coordinate system in the indoor environment based on the UWB communication, and determine the location of each of the devices (e.g., the first device 310 and the second device 320). The coordinate system may be set in various manners, for example, based on a relative location or an absolute location, and the locations of the reference electronic device 100 and each device 310 or 320 may be registered based on the coordinate system.

According to an embodiment, the coordinate system may be set in two dimensions or three dimensions according to antennas mounted on the reference electronic device 100 and the remote control device 200. When the coordinate system is set in two dimensions, the indoor environment may be expressed as a plane (e.g., an XY plane viewed from the +Z axis) as described with reference to FIG. 2A, wherein the location of each device 100, 200, 310, or 320 may be determined to be a point, line, or area on the coordinate system, and the pointing direction 255 of the remote control device 200 may be determined to be one direction on the coordinate system.

According to an embodiment, the coordinate system may be set by the processor 130 of the reference electronic device 100 or the processor of the remote control device 200. According to another embodiment, information about the distance or angle may be measured based on a method such as angle of arrival (AoA), time of flight (TOF), or time difference of arrival (TDOA) through the UWB communication between the reference electronic device 100 and the remote control device 200. The information about the distance or angle may be transmitted to the external server, and the coordinate system may be set by the server. Information about the set coordinate system may be stored in the memory 120 of the reference electronic device 100 or the memory 230 of the remote control device 200, or may be stored in the external server and transmitted according to a request from the processor 130 of the reference electronic device 100 or the processor 230 of the remote control device 200.

According to an embodiment, before controlling the devices 310 and 320 with the remote control device 200, the user may register a virtual envelope of each device on the coordinate system using the remote control device 200. The processor 230 of the remote control device 200 or the processor 130 of the reference electronic device 100 may determine a control target device based on the envelope of each of the devices 310 and 320 on the coordinate system, the location of the remote control device 200 on the coordinate system, and the pointing direction 255.

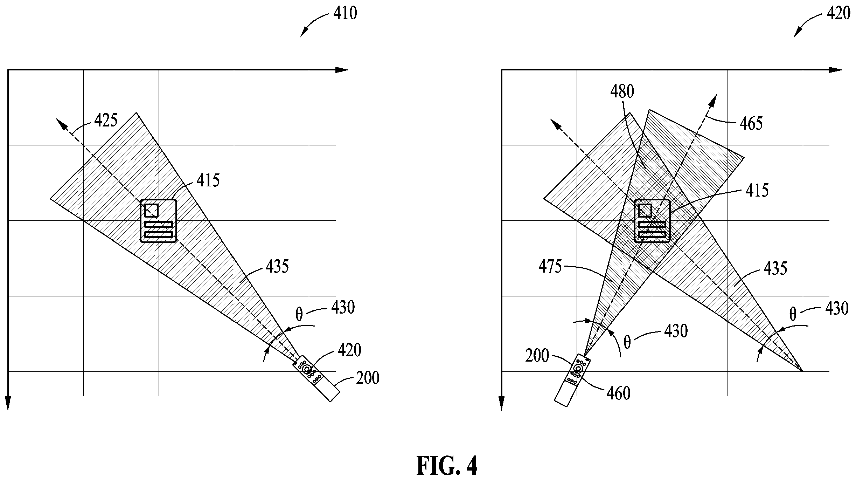

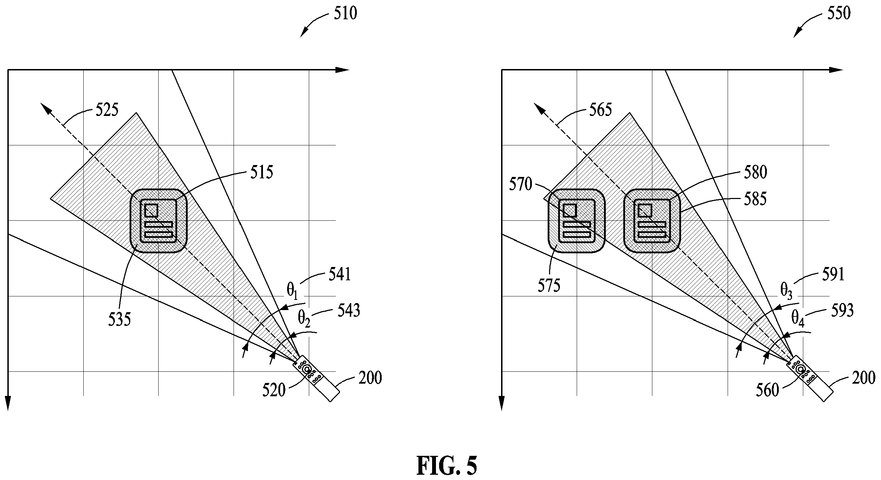

The process of registering an envelope for a target device among the one or more devices 310 and 320 according to an embodiment will be described with reference to FIG. 4. The process of determining a control target device and the process of adjusting a field of view (FoV) for the control target device in a control operation according to an embodiment, after registering the envelopes of the devices, will be described with reference to FIG. 5.

FIG. 4 is a diagram illustrating an operation of determining an envelope for a target device according to an embodiment.

Referring to FIG. 4, as described with reference to FIG. 3, coordinate systems 410 and 450 set by the reference electronic device 100 and the remote control device 200 are present, and a process of registering an envelope of a target device 415 on a coordinate system by the remote control device 200 is shown. According to an embodiment, the coordinate systems 410 and 450 may be set with the location of the reference electronic device 100 as the origin.

According to an embodiment, the location of the target device 415 on the coordinate system 410 is shown as an example only to describe the process of registering an envelope in which the location of the target device 415 is detectable, and an envelope of the target device 415 on the virtual coordinate system 410 recognized by the processor 230 of the remote control device 200 or the processor 130 of the reference electronic device 100 is not yet determined.

According to an embodiment, a user may determine a target device of which an envelope is to be registered among one or more devices (e.g., the first device 310 and the second device 320 of FIG. 3) through the remote control device 200. According to an embodiment, the remote control device 200 may communicate with the one or more devices (e.g., the first device 310 and the second device 320 of FIG. 3) and select a device of which an envelope is to be registered. For example, a user interface related to selecting a device of which the location is to be registered may be provided on a display (e.g., the display unit 110 of FIG. 1B) of the reference electronic device 100, and the user may determine the target device of which the envelope is to be registered based on a user input through the remote control device 200.

According to an embodiment, the remote control device 200 may be located at first coordinates 420 on the coordinate system 410 set by the reference electronic device 100 and the remote control device 200. According to an embodiment, a FoV 430 may be determined in a predetermined size.

According to an embodiment, to register the envelope of the target device 415, the user may point the remote control device 200 to the target device 415 at the first coordinates 420 on the coordinate system 410, and the pointing direction of the remote control device 200 may be determined to be a first direction 425. For ease of description, the first direction 425 is shown as exactly pointing at the target device 415 on the coordinate system 410 of FIG. 4, but as described above, the location of the target device 415 on the coordinate system 410 is not yet determined, and the first direction 425 in which the user points to the target device may slightly differ from the actual location of the target device 415.

The first direction 425 may be determined in various manners. According to an embodiment, the first direction 425 may be determined based on a user input through a user interface. For example, when a guide message saying "Please press the button toward a device to register its location" is provided on a user interface provided on the display (e.g., the display unit 110 of FIG. 1B) of the reference electronic device 100, the user may perform an operation (e.g., pressing the button) while pointing the remote control device 200 to the target device, whereby the first direction 425 may be determined.

According to another embodiment, the first direction may be determined without a user input. For example, "Please point a device to register its location" may be provided on the user interface provided on the display (e.g., the display unit 110 of FIG. 1B) of the reference electronic device 100, and then the pointing direction of the remote control device 200 at the time a threshold time elapses may be determined to be the first direction 425.

According to an embodiment, the first coordinates 420 may be determined based on the location of the remote control device 200 at the time the first direction 425 is determined. For example, as described above, when the first direction 425 is determined based on a user input with the remote control device 200 toward the target device, the first coordinates 420 may be determined based on the location at the time the user input is received. Alternatively, when the pointing direction of the remote control device 200 at the time a threshold time elapses is determined to be the first direction 425, the location of the remote control device 200 at the time the threshold time elapses may be determined to be the first coordinates 420.

According to an embodiment, a first control area 435 may be determined based on the first coordinates 420 of the remote control device 200 on the virtual coordinate system 410, the first direction 425 pointed by the user, and the predetermined FoV 430. According to an embodiment, the calculation of the first control area 435 may be performed by the processor 230 of the remote control device 200 or the processor 130 of the reference electronic device 100. According to an embodiment, information about the virtual coordinate system 410, the first coordinates 420, the FoV 430, and the first direction 425 may be transmitted from the remote control device 200 to the reference electronic device 100 and transmitted from the reference electronic device 100 to the external server, such that the external server may determine the first control area 435.

According to an embodiment, the process of determining an envelope after the first control area 435 is determined will be described with reference to the virtual coordinate system 450. For ease of description, the description will be provided with reference to the coordinate system 450 separate from the coordinate system 410, but the coordinate system 450 is the same as the coordinate system 410. For example, the coordinate system 450 may be set with the reference electronic device 100 as the origin, like the coordinate system 410. The description already provided about the coordinate system 410 will not be repeated.

According to an embodiment, as in the description of the process of determining the first control area 435 with reference to the coordinate system 410, a second control area 475 may be determined based on second coordinates 460 of the remote control device 200, a second direction 465, and the FoV 430. According to an embodiment, the FoV 430 may be constant in the process of registering the envelope of the target device.

According to an embodiment, an overlap area 480, which is an area where the first control area 435 and the second control area 475 overlap, may be determined. As described in the process of determining the first control area 435, the calculation for the overlap area 480 may also be performed by at least one of the processor 130 of the reference electronic device 100, the processor 230 of the remote control device 200, and the external server.

According to an embodiment, the overlap area 200 may be registered as the envelope for the target device 415. The envelope for the target device 415 may not only be determined based on the first control area 435 and the second control area 475, but also be updated according to various embodiments. According to an embodiment, when the size of the overlap area 480 determined based on the first control area 435 and the second control area 475 is greater than or equal to a threshold size, the processor 230 (or the processor 130) may provide a user interface for requesting the user for an additional operation through the display of the reference electronic device 100. For example, "Please do the procedure again to register the accurate location" may be provided on the user interface, provided on the display (e.g., the display unit 110 of FIG. 1B) of the reference electronic device 100, and third coordinates and a third direction from the third coordinates to the target device may be determined. A third control area for the target device may be determined based on the third coordinates, the third direction, and the FoV 430, and an area where the overlap area 480 and the third control area overlap may be updated as the envelope for the target device.

According to an embodiment, by registering the area where the control areas overlap as the envelope for the target device, the user may more conveniently register the location of the device in an indoor environment (e.g., the indoor environment of FIG. 3).

According to an embodiment, the envelope for each of the devices 310 and 320 in the indoor environment described with reference to FIG. 3 may be registered in the same manner. The process of controlling a device after registering an envelope for each of one or more devices will be described with reference to FIG. 5.

FIG. 5 is a diagram illustrating an operation of adjusting a FoV for a control target device according to an embodiment.

Referring to FIG. 5, a process of determining a device to be controlled and adaptively adjusting a FoV for the control target device based on an envelope will be described.

According to an embodiment, a coordinate system 510 and a coordinate system 550 may be coordinate systems set based on UWB communication between the remote control device 200 and the reference electronic device 100, like the coordinate system 410 described with reference to FIG. 4. The description already provided about the coordinate system 410 with reference to FIG. 4 will not be repeated.

According to an embodiment, as described with reference to FIG. 4, an envelope may be registered for each of the devices, and the user may control a device with the remote control device 200. From among the devices 310 and 320 in the indoor environment as shown in FIG. 3, a control target device through the remote control device 200 may be determined.

According to an embodiment, a control target device 515 to be controlled by the remote control device 200 may be determined based on an envelope 535 of the control target device 515 on the preset coordinate system 510 and a pointing direction 525 of the remote control device 200. The envelope 535 for the control target device 515 may be registered in advance, as described with reference to FIG. 4.

According to an embodiment, coordinates 520 of the remote control device 200 on the coordinate system 510 and the pointing direction 525 of the remote control device 200 for the control target device 515 may be determined in various manners. According to an embodiment, the pointing direction of the remote control device 200 at the time an input for controlling a device (e.g., a power-on button input) is received by the remote control device 200 may be determined to be the pointing direction 525, and the location of the remote control device 200 on the coordinate system at that time may be determined to be the coordinates 520.

According to an embodiment, a device with a straight line overlapping the envelope 535, wherein the straight line is based on the coordinates 520 of the remote control device 200 on the coordinate system 510 and the pointing direction 525 of the remote control device 200, may be determined to be the control target device, and the user may control the control target device with the remote control device 200.

According to an embodiment, the process of adjusting the FoV for the control target device 515 based on the envelope 535 of the control target device 515 will be described with reference to the coordinate system 510. The FoV of the remote control device 200 for the control target device 515 may be determined to be a first FoV 541. The first FoV 541 may be a FoV (e.g., the FoV 430) used when the envelope of the control target device 515 is registered.

According to an embodiment, the FoV may be adjusted according to the envelope 535, and for example, the FoV for the control target device 515 may be adjusted from the first FoV 541 to a second FoV 543.

According to an embodiment, the process of adjusting the FoV for the control target device 580 based on envelopes 575 and 585 of the other device 570 and the control target device 580 will be described with reference to the coordinate system 550. The FoV of the remote control device 200 for the control target device 580 may be determined to be a third FoV 591. The third FoV 591 may be a FoV used when the envelope of the control target device 580 is registered.

According to an embodiment, the FoV for the control target device 580 may be adjusted based on the respectively pre-registered envelopes 575 and 585 of the devices in an indoor environment (e.g., the indoor environment of FIG. 3). According to an embodiment, as shown in the coordinate system 550 of FIG. 5, the envelope 585 of the control target device as well as the envelope 575 of the other device may be included in an area according to a pointing direction 565 of the remote control device 200 from coordinates 560 and the FoV 591 of the remote control device 200. According to an embodiment, the FoV for the control target device 580 may be adjusted so that the size of an overlap area between the area according to the pointing direction 565 from the coordinates 560 and the FoV 591 and the envelope 575 of the other device 570 reduces. For example, the FoV for the control target device 580 may be adjusted from the third FoV 591 to a fourth FoV 593.

According to an embodiment, as a control target device is determined and a FoV for the control target device is adaptively adjusted, the user may more accurately control the control target device. The control target device may be controlled based on a control input through the remote control device 200.

### < Method of Registering Envelope for Target Device >

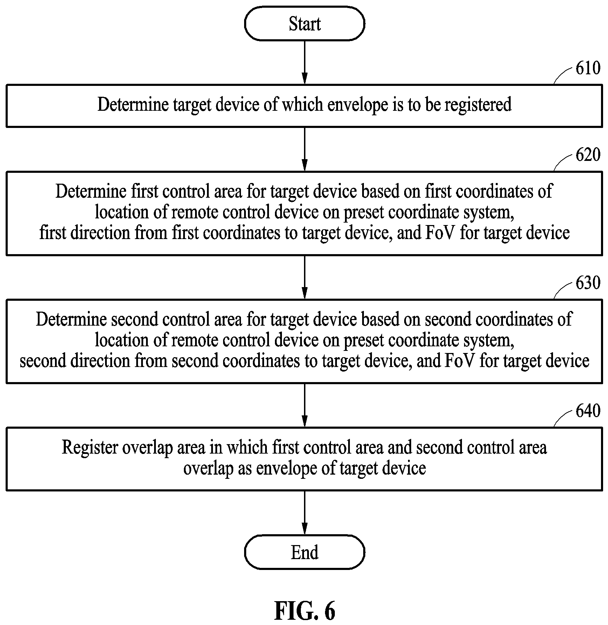

FIG. 6 is a flowchart illustrating an operation of a remote control device according to various embodiments.

Operations (operations 610 to 640, operations 710 and 720, operations 810 to 830, and operations 910 and 920) to be described with reference to FIGS. 6 to 9 may be performed by the processor 230 of the remote control device 200 described above with reference to FIG. 2B. According to an embodiment, operations 610 to 640 may be performed by the processor 130 of the reference electronic device 100 described above with reference to FIG. 1B. For ease of description, the following operations will be described based on the processor 230 of the remote control device 200. For a concise description, the description already provided with reference to FIGS. 1 to 5 will not be repeated.

According to an embodiment, in operation 610, the processor 230 may determine a target device of which an envelope is to be registered among one or more devices (e.g., the first device 310 and the second device 320 of FIG. 3). As described with reference to FIG. 4, a user interface related to selecting a device of which the location is to be registered may be provided on a display (e.g., the display unit 110 of FIG. 1B) of the reference electronic device 100, and the processor 230 may determine the target device of which the envelope is to be registered based on a user input through the remote control device 200.

According to an embodiment, in operation 620, the processor 230 may determine a first control area based on first coordinates of the location of the remote control device on a coordinate system, a first direction from the remote control device to the target device, and a FoV for the target device. Like the coordinate system (e.g., the coordinate system 410 of FIG. 4) described with reference to FIG. 4, the coordinate system may be preset by UWB communication between the reference electronic device 100 and the remote control device 200. The description of the first coordinates and the first direction has already been provided with reference to FIG. 4 and thus, will not be repeated.

As described with reference to FIG. 4, the processor 230 may determine the first control area 435 based on the first coordinates 420 of the location of the remote control device 200 on the coordinate system 410, the first direction 425 from the first coordinates 420 to the target device, and the FoV 430 for the target device.

According to an embodiment, in operation 630, the processor 230 may determine a second control area based on second coordinates of the location of the remote control device on the coordinate system, a second direction from the remote control device to the target device, and the FoV for the target device. The description of operation 630 has already been provided with reference to operation 620 and FIG. 4 and thus, will not be repeated.

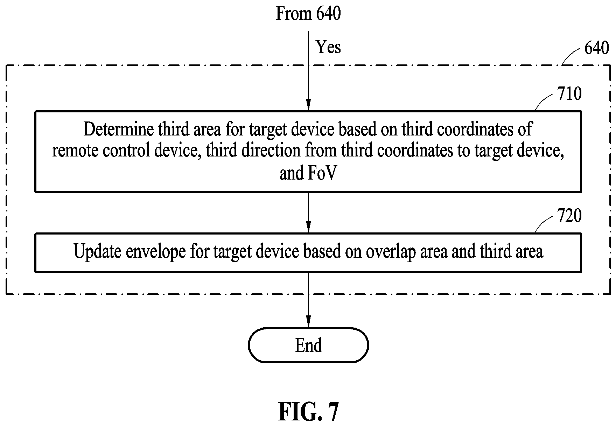

According to an embodiment, in operation 640, the processor 230 may register an overlap area where the first control area and the second control area overlap as the envelope for the target device. As described with reference to the coordinate system 450 of FIG. 4, the overlap area 480 where the first control area 435 and the second control area 475 overlap may be calculated and registered as the envelope for the target device. An operation of updating the envelope according to various embodiments will be described with reference to FIG. 7.

According to an embodiment, as described above, operations 610 to 640 may be performed by the processor 130 of the reference electronic device 100 described above with reference to FIG. 1B, and specifically, determining the first control area, determining the second control area, and registering the overlap area as the envelope for the target device in operations 620 to 640 may be performed by the processor 130. Hereinafter, the operation of the processor 130 will be described in an aspect of the reference electronic device 100.

According to an embodiment, in operation 620, the processor 130 may receive the information about the first direction 425 and the first coordinates 420 of the remote control device 200 on the preset coordinate system 410, and the FoV 430 from the remote control device 200 and determine the first control area 435 for the target device 415. According to an embodiment, the information about the coordinate system 410 and the information about the FoV 430 may be retained by the processor 120, rather than being received from the remote control device 200.

According to an embodiment, as described with reference to FIG. 4, the first direction 425 and the first coordinates 420 may be determined, and the processor 130 may receive the information about the first direction 425 and the first coordinates 420 from the remote control device 200.

However, embodiments are not limited thereto, and the processor 130 may determine the first direction 425 and the first coordinates 420 based on data sensed by the remote control device 200. For example, as described with reference to FIG. 2B, the sensing unit 291 of the remote control device 200 may include a gyro sensor, an acceleration sensor, and the like, and the remote control device 200 may sense, for example, 9-axis motion data through the sensing unit 291. The processor 130 may receive the 9-axis motion data from the remote control device 200 and determine the information about the first direction 425 of the remote control device 200 based on the 9-axis motion data. Further, the processor 130 may determine the first coordinates 420 on the coordinate system 410 based on the information received from the remote control device 200.

According to an embodiment, the processor 120 may determine the first control area 435 for the target device 415 based on the information about the first direction 425, the first coordinates 420, and the FoV 430.

According to an embodiment, in operation 630, the processor 130 may determine the second control area 475 in the same manner as described for operation 620.

According to an embodiment, in operation 640, the processor 130 may register the overlap area 480 where the first control area 435 and the second control area 475 overlap as the envelope for the target device.

FIG. 7 is a flowchart illustrating an operation of updating an envelope for a target device according to various embodiments.

According to an embodiment, operations 710 and 720 may correspond to an operation (e.g., operation 640 of FIG. 6) of registering an envelope for the target device described with reference to FIG. 6.

As described with reference to the coordinate system 450 of FIG. 4, the envelope for the target device may not only be determined based on the first control area and the second control area, but also be updated according to various embodiments.

According to an embodiment, when the size of an overlap area (e.g., the overlap area 480 of FIG. 4) determined based on the first control area and the second control area is greater than or equal to a threshold size, the processor 230 may provide a user interface for requesting the user for an additional operation through the display of the reference electronic device 100. For example, "Please do the procedure again to register the accurate location" may be provided on the user interface, provided on the display (e.g., the display unit 110 of FIG. 1B) of the reference electronic device 100.

According to an embodiment, in operation 710, the processor 230 may repeatedly perform the operations described with reference to operations 620 and 630. For example, in operation 710, the processor 230 may determine a third control area for the target device based on third coordinates of the remote control device 200, a third direction from the third coordinates to the target device, and the FoV for the target device.

According to an embodiment, in operation 720, the processor 230 may update an area where the third control area determined in operation 710 and the overlap area between the first control area and the second control area overlap as a new envelope for the target device. For example, the processor 230 may newly register the area where the third control area and the overlap area (e.g., the overlap area 480 of FIG. 4) between the first control area and the second control area overlap as the envelope for the target device.

According to an embodiment, operations 710 and 720 may be performed by the processor 130 of the reference electronic device 100 described above with reference to FIG. 1B, and for example, as described with reference to FIG. 6, the processor 130 of the reference electronic device 100 may receive data from the remote control device 200 and perform operations 710 and 720.

According to an embodiment, the envelope for each of the devices (e.g., the first device 310 and the second device 320 of FIG. 3) in an indoor environment (e.g., the indoor environment of FIG. 3) may be registered and updated through operations 610 to 640 and operations 710 and 720.

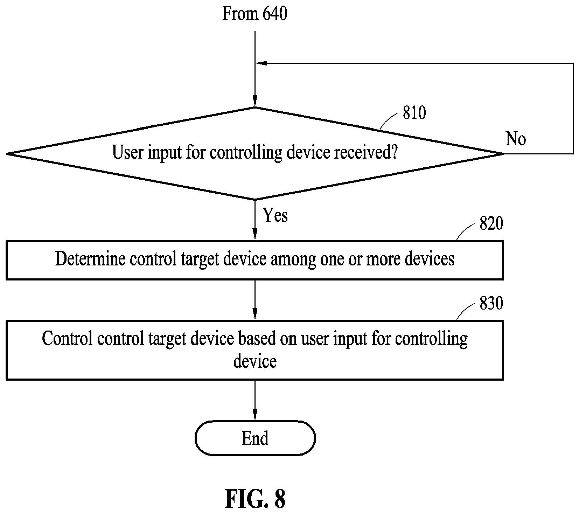

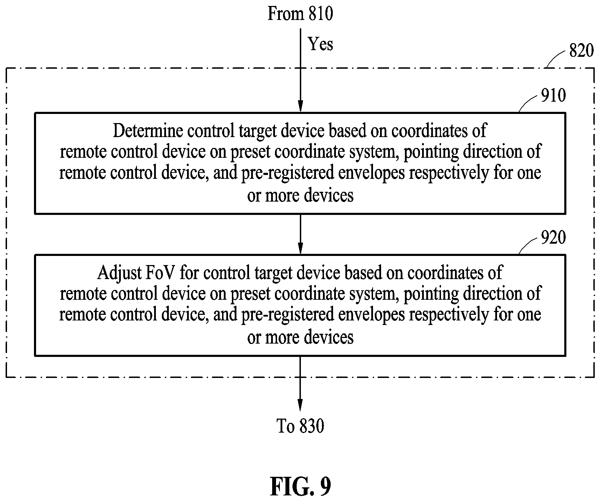

Thereafter, the user may determine, with a single remote control device 200, a control target device to be controlled among several devices and control the control target device according to an input. The operation of controlling a control target device according to various embodiments will be described in detail with reference to FIG. 8. The operation of adjusting a FoV for the control target device in the process of determining the control target device will be described in detail with reference to FIG. 9.

### <Method of Controlling Control Target Device>

FIG. 8 is a flowchart illustrating an operation of controlling a control target device according to various embodiments.

According to an embodiment, in operation 810, the processor 230 may receive a user input for controlling a device. For example, a user may press a power-on button of the remote control device 200. For ease of description, it has been described that operation 810 is performed after operation 640 of registering the envelope for the target device with reference to FIG. 8, but embodiments are not limited thereto. For example, operation 810 may be performed after the process of registering an envelope for one device (e.g., the first device 310 of FIG. 3) and then registering an envelope for the other device (e.g., the second device 320 of FIG. 3) is performed.

According to an embodiment, in operation 820, the processor 230 may determine a control target device among one or more devices. The operation of determining a control target device and adjusting a FoV for the control target device will be described in detail with reference to FIG. 9.

According to an embodiment, in operation 830, the processor 230 may control the control target device based on the user input for controlling a device. For example, when the user input received in operation 810 is an input for a power-on button, the control target device determined in operation 820 may be powered on.

According to an embodiment, operations 810 to 830 may be performed by the processor 130 of the reference electronic device 100 described above with reference to FIG. 1B, and for example, as described with reference to FIG. 6, the processor 130 of the reference electronic device 100 may receive data from the remote control device 200 and perform operations 810 to 830.

FIG. 9 is a flowchart illustrating an operation of adjusting a FoV for a control target device according to various embodiments.

According to an embodiment, operations 910 and 920 may correspond to an operation (e.g., operation 820 of FIG. 8) of determining a control target device described above with reference to FIG. 8.

According to an embodiment, in operation 910, the processor 230 may determine a control target device based on coordinates of a remote control device on a preset coordinate system, a pointing direction of the remote control device, and pre-registered envelopes respectively for the one or more devices.

As described with reference to FIG. 5, the coordinates 520 of the remote control device 200 on the coordinate system 510 and the pointing direction 525 for the control target device 515 may be determined in various manners. For example, the pointing direction of the remote control device 200 at the time a user input for controlling a device is received in operation 810 may be determined to be the pointing direction 525 of the remote control device 200, and the location of the remote control device 200 on the coordinate system at that time may be determined to be the coordinates 520.

According to an embodiment, in operation 910, as described with reference to FIG. 5, the processor 230 may determine a device corresponding to an overlap envelope to be the control target device based on the coordinates of the remote control device on the coordinate system and the pointing direction of the remote control device.

According to an embodiment, in operation 920, the processor 230 may adjust a FoV for the control target device based on coordinates of the remote control device 200 on the preset coordinate system, a pointing direction of the remote control device 200, and pre-registered envelopes respectively for the one or more devices.

For example, as described with reference to the coordinate system 510 and the coordinate system 550 of FIG. 5, the processor 230 may adjust the FoV for the control target device based on the envelopes of the devices (e.g., the control target device 580 and the other device 570 of FIG. 5).

According to an embodiment, operations 910 and 920 may be performed by the processor 130 of the reference electronic device 100 described above with reference to FIG. 1B, and for example, as described with reference to FIG. 6, the processor 130 of the reference electronic device 100 may receive data from the remote control device 200 and perform operations 910 and 920.

According to an embodiment, as a control target device is determined and a FoV for the control target device is adaptively adjusted, the user may more accurately control the control target device.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described embodiments, or vice versa.

A number of embodiments have been described above. Nevertheless, it should be understood that various modifications may be made to these embodiments. For example, suitable results may be achieved if the described techniques are performed in a different order and/or if components in a described system, architecture, device, or circuit are combined in a different manner and/or replaced or supplemented by other components or their equivalents.

Therefore, other implementations, other examples, and equivalents to the claims are also within the scope of the following claims.

## Claims

1. An electronic device for controlling one or more devices, the electronic device comprising:
a communication module configured to communicate with the one or more devices;
a memory configured to store computer-executable instructions; and
a processor configured to execute the instructions by accessing the memory,
wherein the instructions are configured to determine a target device of which an envelope is to be registered among the one or more devices, determine a first control area for the target device based on first coordinates of a location of the electronic device on a preset coordinate system, a first direction from the first coordinates to the target device, and a field of view (FoV) for the target device, determine a second control area for the target device based on second coordinates of the location of the electronic device on the preset coordinate system, a second direction from the second coordinates to the target device, and the FoV, and register an overlap area where the first control area and the second control area overlap as the envelope for the target device.

2. The electronic device of claim 1, wherein the instructions are further configured to:
determine a third control area for the target device based on third coordinates of the location of the electronic device on the preset coordinate system, a third direction from the third coordinates to the target device, and the FoV, and
update the envelope for the target device based on the third control area and the overlap area.

3. The electronic device of claim 1, wherein the instructions are further configured to:
when a user input for controlling a device is received,
determine a control target device among the one or more devices, and
control the control target device based on the user input for controlling the device.

4. The electronic device of claim 3, wherein the instructions are further configured to adjust a FoV for the control target device based on coordinates of the electronic device on the preset coordinate system, a pointing direction of the electronic device, and pre-registered envelopes respectively for the one or more devices.

5. The electronic device of claim 1, wherein the target device is determined based on a user input.

6. The electronic device of claim 1, wherein the preset coordinate system is set by the electronic device and a reference electronic device for performing ultra-wideband (UWB) communication with the electronic device.

7. The electronic device of claim 6, wherein the first control area, the second control area, and the overlap area are calculated by the reference electronic device.

8. The electronic device of claim 1, wherein the electronic device communicates with the one or more devices based on at least one of Infrared (IR) or Bluetooth Low Energy (BLE).

9. An operating method of an electronic device for registering an envelope of a device, the operating method comprising:
determining a target device of which an envelope is to be registered among one or more devices for performing communication with the electronic device;
determining a first control area for the target device based on first coordinates of a location of the electronic device on a preset coordinate system, a first direction from the first coordinates to the target device, and a field of view (FoV) for the target device;
determining a second control area for the target device based on second coordinates of the location of the electronic device on the preset coordinate system, a second direction from the second coordinates to the target device, and the FoV; and
registering an overlap area where the first control area and the second control area overlap as the envelope for the target device.

10. The operating method of claim 9, further comprising:
determining a third control area for the target device based on third coordinates of the location of the electronic device on the preset coordinate system, a third direction from the third coordinates to the target device, and the FoV; and
updating the envelope for the target device based on the third control area and the overlap area.

11. The operating method of claim 9, further comprising:
when a user input for controlling a device is received,
determining a control target device among the one or more devices; and
controlling the control target device based on the user input for controlling the device.

12. The operating method of claim 11, further comprising:
adjusting a FoV for the control target device based on coordinates of the electronic device on the preset coordinate system, a pointing direction of the electronic device, and pre-registered envelopes respectively for the one or more devices.

13. The operating method of claim 9, wherein the target device is determined based on a user input.

14. The operating method of claim 9, wherein
the preset coordinate system is set by the electronic device and a reference electronic device for performing ultra-wideband (UWB) communication with the electronic device, and
the first control area, the second control area, and the overlap area are calculated by the reference electronic device.

15. The operating method of claim 9, wherein the electronic device communicates with the one or more devices based on at least one of Infrared (IR) or Bluetooth Low Energy (BLE).
